# EUROPEAN PATENT APPLICATION

(11) **EP 3 047 993 A1**
(43) Date of publication of application: **27.07.2016**
(21) Application number: 16151077.1
(22) Date of filing: 13.01.2016
(51) Int. Cl.: B60K 1/00, B60K 25/00

(54) **ELECTRIC VEHICLE, HOLDING MECHANISM, AND METHOD OF MANUFACTURING ELECTRIC VEHICLE**

(30) Priority: 16.01.2015 JP 2015007206
(71) Applicant: Toyota Jidosha Kabushiki Kaisha, Toyota-shi, Aichi 471-8571 (JP)
(72) Inventor: NAGAOSA, Hideo, Toyota-shi, Aichi 471-8571 (JP)
(74) Representative: TBK

(57) **Abstract**

An electric vehicle (1) includes a suspension member (10) attached to a vehicle body (2), a motor (30) fixed to the suspension member, a power source (51), an electronic device (53; 55; 57; 59) to which electric power is supplied from the battery, and a holding mechanism (70) including a holder and a fixing portion. The holder collectively holds the battery and the electronic device in an integrated manner. The fixing portion fixes the holder to the motor.

## Description

### BACKGROUND OF THE INVENTION

### 1. Field of the Invention

The invention relates to an electric vehicle, a holding mechanism, and a method of manufacturing an electric vehicle.

### 2. Description of Related Art

Japanese Patent No. 4804969 describes a fuel cell vehicle including a support frame that supports a fuel cell and a high-voltage electrical component box, right and left side frames extending in the front-rear direction of a vehicle body, and a subframe on which a motor driven by the fuel cell and a front suspension are disposed. The support frame is connected to the right and left side frames, and the subframe is disposed below the support frame.

In the fuel cell vehicle described in Japanese Patent No. 4804969, the support frame that supports, for example, the fuel cell is connected to the side frames from above in the up-down direction of the vehicle body. The subframe that supports, for example, the motor is attached to a lower portion of the vehicle body. Thus, the support frame that supports, for example, the fuel cell needs to be mounted in a motor compartment of the vehicle body, separately from the attachment of the subframe that supports, for example, the motor to the vehicle body. This makes the mounting work cumbersome and complicated.

### SUMMARY OF THE INVENTION

The invention provides an electric vehicle, a holding mechanism, and a method of manufacturing an electric vehicle, the invention improving the efficiency of mounting a motor, a battery, and an electronic device to a vehicle body of the electric vehicle.

An aspect of the invention relates to an electric vehicle including a suspension member attached to a vehicle body, a motor fixed to the suspension member, the motor moving the electric vehicle, a power source used to drive the motor, an electronic device to which electric power is supplied from the battery, and a holding mechanism including a holder and a fixing portion. The holder collectively holds the battery and the electronic device in an integrated manner. The fixing portion fixes the holder to the motor.

The battery and the electronic device are attached to the motor via the holding mechanism before the suspension member to which the motor is fixed is attached to the vehicle body. In this state, the suspension member is attached to the vehicle body. This improves the efficiency of mounting the motor, the battery, and the electronic device to the vehicle body.

The fixing portion may fixes the holder to a top portion of the motor, and the fixing portion may be located above a lowermost portion of the holding mechanism, the lowermost portion being located at a lowermost position within the holding mechanism. Thus, the distance in the height direction between the fixing portion disposed on the top portion of the motor to an uppermost portion of the holding mechanism is maintained short. As a result, the vibrations of the holding mechanism are reduced as compared with the case where the lowermost portion of the holding mechanism is fixed to, for example, the suspension member.

A front end portion of the motor may be located forward of the battery and the electronic device in the front-rear direction of the vehicle body. Thus, in the event of a frontal collision of the electric vehicle, an impact caused by the frontal collision is first applied to the motor, resulting in reduction of an impact to be applied to the battery and the electronic device.

The electronic device may include an auxiliary device driven by electric power from the battery, and a power control unit configured to convert a direct current from the battery into an alternating current and to supply the alternating current to the auxiliary device. The battery may be disposed adjacent to the power control unit and electrically connected to the power control unit, and the power control unit is disposed adjacent to the auxiliary device and electrically connected to the auxiliary device. This configuration reduces the distance between these electronic components electrically connected to each other, resulting in reduction in electric transmission loss.

The electronic device may include an auxiliary device, and a power control unit. The battery may overlap with the motor, the power control unit, and the auxiliary device when viewed from above. This configuration contributes to effective use of the space.

The holding mechanism may be disposed such that the longitudinal direction of the holding mechanism coincides with the axial direction of a drive shaft connected to the motor. A vehicle body for an engine vehicle can be applied to the electric vehicle because the holding mechanism can be disposed in place of an engine to be disposed in the engine compartment such that the longitudinal direction of the engine coincides with the axial direction of the drive shaft.

The electronic device may be opposed to a lateral side face of the motor. This configuration makes it possible to lower the position of the center of gravity the entirety of the assembly including the battery, the electronic device, and the holding mechanism, thereby improving the stability of the holding mechanism.

The power source may be a fuel cell or a secondary battery.

A second aspect of the invention relates to a holding mechanism including a holder that collectively holds, in an integrated manner, a battery and an electronic device to which electric power is supplied from the battery, and a fixing portion fixed to a motor to be fixed to a suspension member to be attached to a vehicle body of an electric vehicle.

A third aspect of the invention relates to a method of manufacturing an electric vehicle. The method includes: fixing a motor to a suspension member; making a holder of a holding mechanism collectively hold, in an integrated manner, a battery and an electronic device to which electric power is supplied from the battery; fixing a fixing portion of the holding mechanism to the mortor; and attaching the suspension member to a vehicle body of the electric vehicle, the motor having been fixed to the suspension member and the fixing portion of the holding mechanism having been fixed to the motor.

The aspects of the invention provide an electric vehicle, a holding mechanism, and a method of manufacturing an electric vehicle. According to the aspects of the invention, the efficiency of mounting a motor, a battery, and an electronic device to a vehicle body of the electric vehicle.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a top view of a motor compartment in a vehicle body of a fuel cell vehicle according to an embodiment of the invention;
FIG. 2 is a front view of the motor compartment;
FIG. 3 is a side view of the motor compartment;
FIG. 4 is a top view of a suspension member and a motor assembly fixed to the suspension member, which have not been mounted in the vehicle body;
FIG. 5 is a top view of a holding rack that has not been fixed to the motor assembly;
FIG. 6 is a view illustrating a process of attaching the holding rack to the motor assembly;
FIG. 7 is a view illustrating a state where the holding rack is fixed to the motor assembly fixed to the suspension member;
FIG. 8 a view schematically illustrating the configuration according to the embodiment;
FIG. 9 is a view schematically illustrating the configuration in a comparative example; and
FIG. 10 is a view illustrating detachment of the suspension member in the event of a frontal collision.

### DETAILED DESCRIPTION OF EMBODIMENTS

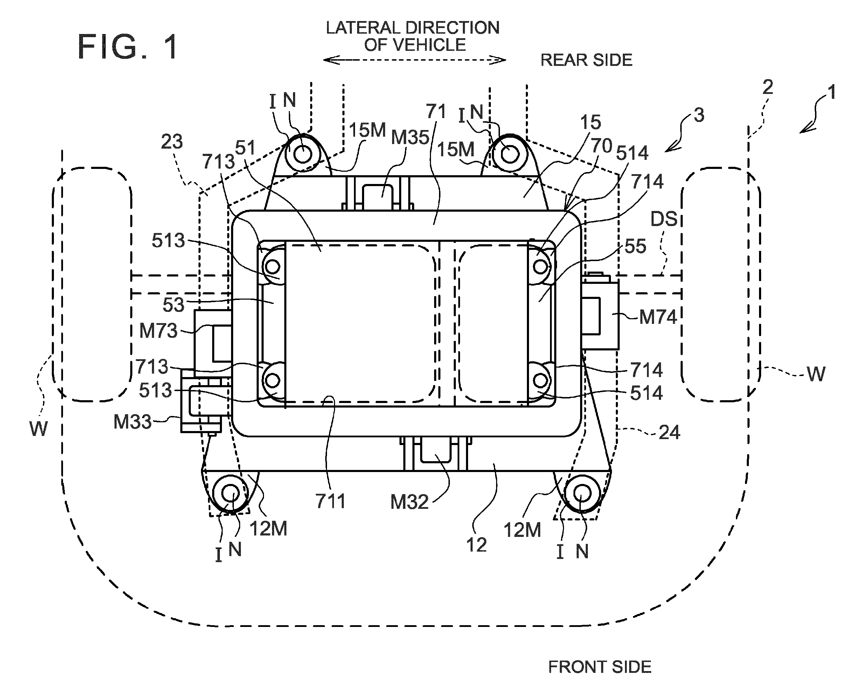

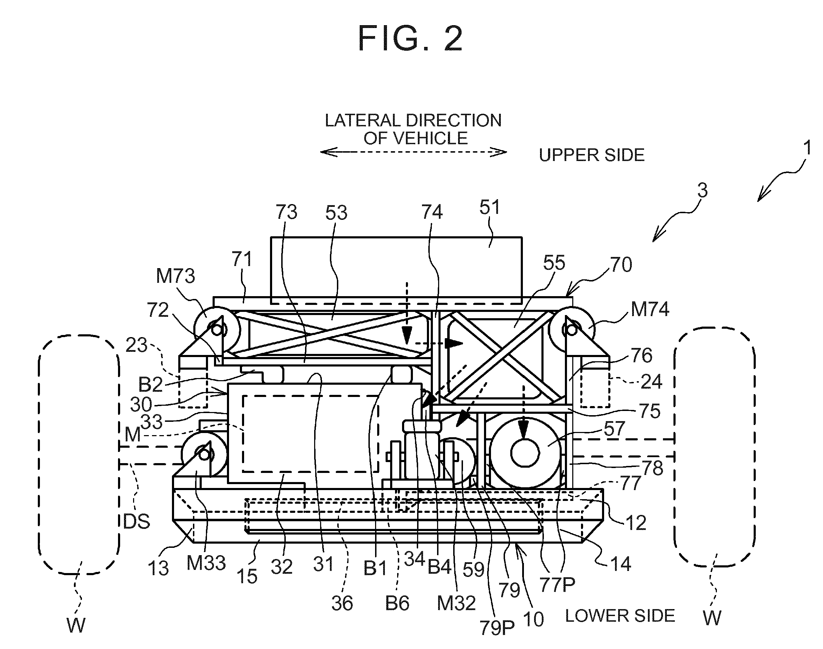

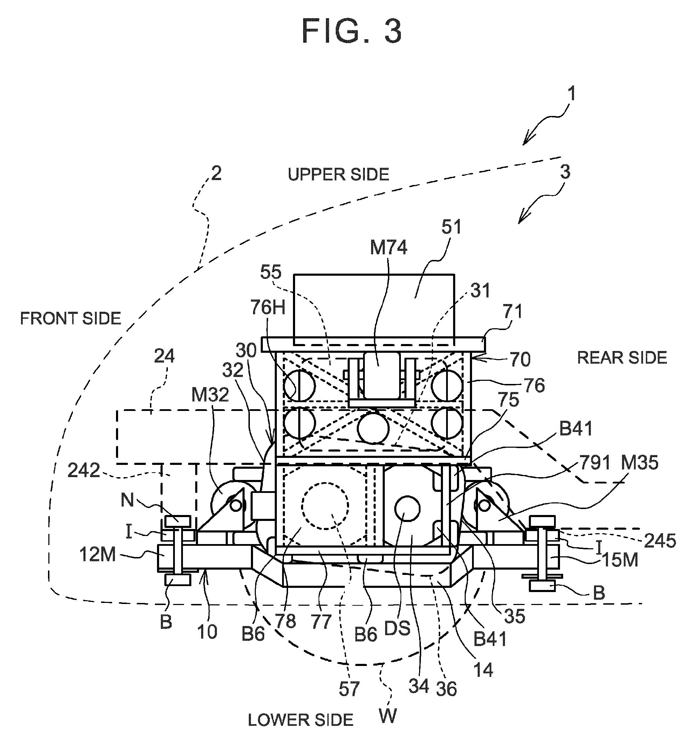

Hereinafter, an electric vehicle according to an embodiment of the invention will be described. In the present embodiment, a fuel cell vehicle 1, which is an example of an electric vehicle, will be described. FIG. 1 is a top view of a motor compartment 3 in a vehicle body 2 of the fuel cell vehicle 1 of the present embodiment. FIG. 2 is a front view of the motor compartment 3. FIG. 3 is a side view of the motor compartment 3. FIG. 1 and FIG. 3 schematically illustrate the contour of the vehicle body 2. In FIG. 2, illustration of the vehicle body 2 is omitted. The motor compartment 3 is disposed at the front side of the vehicle body 2. Components such as a suspension member 10, a pair of side members 23, 24, a motor assembly 30, and a fuel cell stack (hereinafter, referred to as "fuel cell") 51, and a holding rack 70 are disposed in the motor compartment 3.

The suspension member 10 is made of metal, and has a frame shape as viewed from above. The suspension member 10 has a front cross member 12 and a rear cross member 15 that extend in the lateral direction of the vehicle (vehicle-width direction). The front cross member 12 is disposed at the front side of the vehicle body 2, and the rear cross member 15 is disposed at a position rearward of the front cross member 12 in the front-rear direction of the vehicle body 2. The suspension member 10 is disposed at the lower side of the vehicle body 2, and suspended from the side members 23, 24.

Specifically, a right fixing piece 12M that protrudes forward from the front cross member 12 of the suspension member 10 is fixed via an insulator I to a column 242 extending downward from a front portion of the side member 24, with a bolt B and a nut N. A right fixing piece 15M that protrudes rearward from the rear cross member 15 of the suspension member 10 is fixed via an insulator I to a support panel 245 located at the lower rear side of the side member 24, with a bolt B and a nut N. The support panel 245 will be described later. A left fixing piece 12M that protrudes forward from the front cross member 12 and a left fixing piece 15M that protrudes rearward from the rear cross member 15 are fixed to the side member 23 in the same manner as that in which the right fixing pieces 12M, 15M are fixed to the side member 24.

The side members 23, 24 are framework members that constitute a vehicle body-side framework, and are disposed such that the longitudinal direction thereof coincides with the front-rear direction of the vehicle body 2. The side members 23, 24 are each in the form of a rectangular tube. In FIG. 1 to FIG. 3, the side members 23, 24 are indicated by broken lines.

The motor assembly 30 is a motor assembly that moves the fuel cell vehicle 1. The motor assembly 30 includes a motor M and a transaxle T that transmits the power output from the motor M to wheels W connected to a drive shaft DS. In the motor assembly 30, the motor M and the transaxle T are integral with each other. The transaxle T is a power transmission mechanism including a speed-reducer and a differential. The motor assembly 30 is fixed to the suspension member 10 via mount insulators M32, M33, M35. The mount insulators M32, M33, M35 absorb vibrations between the motor assembly 30 and the suspension member 10.

The fuel cell 51 is an example of a battery used to drive the motor M. A DC-DC converter (hereinafter, referred to as "converter") 53 boosts the voltage output from the fuel cell 51 and then outputs the electric power with a boosted voltage to a power control unit (hereinafter referred to as "PCU") 55. The PCU 55 is an inverter that converts the DC electric power with a voltage boosted by the converter 53 into AC electric power, and supplies the AC electric power to the motor M, an air compressor 57, and a pump 59. The air compressor 57 is used for air conditioning in an occupant compartment of the vehicle body 2. The pump 59 is used to circulate a cooling medium for cooling the fuel cell 51. The electric power supplied from the fuel cell 51 drives the air compressor 57, the pump 59, and the motor M.

In FIG. 2, arrows indicate the directions of flows of electricity. The converter 53, the PCU 55, the air compressor 57, and the pump 59 are examples of electronic devices to which the electric power is supplied from the fuel cell 51. The air compressor 57 and the pump 59 are examples of auxiliary devices driven by the electric power from the fuel cell 51.

The auxiliary devices may be, for example, a compressor used to supply cathode gas to the fuel cell 51, a circulation pump used to recirculate cathode gas or anode gas to the fuel cell 51, and an electromagnetic valve disposed on a circulation path for the cathode gas or anode gas to be supplied to the fuel cell 51 for electric power generation. Note that, the converter 53 may be omitted.

The holding rack 70, which is an example of a holding mechanism, is composed of a plurality of metal members. The holding rack 70 collectively holds the fuel cell 51, the converter 53, the PCU 55, the air compressor 57, and the pump 59 in an integrated manner. A protective frame 71, side plates 72, 76, 78, support plates 73, 75, 77, partition plates 74, 79, and a rear plate 791, which are all made of metal, are assembled together in an integrated manner with a plurality of beams, a plurality of bolts, and a plurality of nuts, into the holding rack 70. That is, multiple members are assembled together in an integrated manner into the holding rack 70. The side plates 72, 76 are supported by the side members 23, 24 via mount insulators M73, M74, respectively. The mount insulators M73, M74 absorb vibrations between the side members 23, 24 and the holding rack 70.

As illustrated in FIG. 1, the protective frame 71 is made of metal, has a frame shape as viewed from above, and surrounds the outer periphery of the fuel cell 51. This configuration protects the fuel cell 51 from damage due to, for example, a collision accident of the fuel cell vehicle 1. Support pieces 713, 714 protrude inward from an inner edge 711 of the protective frame 71. As illustrated in FIG. 1, the two support pieces 713 protrude from the left portion of the inner edge 711, the left portion extending in the front-rear direction of the vehicle body 2. Similarly, the two support pieces 714 protrude from the right portion of the inner edge 711, the right portion extending in the front-rear direction of the vehicle body 2. Thus, the support pieces 713, 714 protrude respectively from the opposed portions of the protective frame 71. As illustrated in FIG. 1, the fuel cell 51 is disposed such that its longitudinal direction coincides with the lateral direction of the vehicle. Two fixing pieces 513 protrude outward from the left edge of the fuel cell 51, and two fixing pieces 514 protrude outward from the right edge of the fuel cell 51. The fixing pieces 513, 514 are respectively supported by the support pieces 713, 714, and fixed to the support pieces 713, 714 with bolts and nuts.

As illustrated in FIG. 2 and FIG. 3, the side plate 72, the partition plate 74, the side plate 76, and the rear plate 791 are substantially perpendicularly fixed to the lower side of the protective frame 71. As illustrated in FIG. 2, the side plate 72 is fixed to the left side of the protective frame 71, the side plate 76 is fixed to the right side of the protective frame 71, and the partition plate 74 is fixed to the protective frame 71 at a position between the side plates 72, 76. The support plate 73 is substantially horizontally disposed between the side plate 72 and the partition plate 74, and supports the converter 53. The support plate 75 is fixed to the lower end of the partition plate 74 and the lower end of the side plate 76, and supports the PCU 55. In other words, the side plate 72, the support plate 73, and the partition plate 74 define a space in which the converter 53 is accommodated, and the partition plate 74, the support plate 75, and the side plate 76 define a space in which the PCU 55 is accommodated. The converter 53 is fixed to the support plate 73 with bolts and nuts, and the PCU 55 is fixed to the support plate 75 with bolts and nuts.

As illustrated in FIG. 2, two reinforcing beams crossing in an X-shaped configuration are fixed to the protective frame 71 and the support plate 73, and disposed in front of the converter 53. Similarly, two reinforcing beams crossing in an X-shaped configuration are fixed to the protective frame 71 and the support plate 73, and disposed behind the converter 53.

The side plate 78, the partition plate 79, and the rear plate 791 are substantially perpendicularly fixed to the lower side of the support plate 75. As illustrated in FIG. 2, the side plate 78 is fixed to the right side of the support plate 75, and the partition plate 79 is fixed to the support plate 75, at a position slightly leftward of the center of the support plate 75. As illustrated in FIG. 3, the rear plate 791 is disposed behind the side plate 78. The side plate 78 and the partition plate 79 are fixed so as to be substantially parallel to each other, and the rear plate 791 is fixed so as to be substantially perpendicular to the side plate 78 and the partition plate 79. The support plate 77 is substantially horizontally fixed to the lower end of the side plate 78, the lower end of the partition plate 79, and the lower end of the rear plate 791. The support plate 77 is slightly longer than the support plate 75.

The air compressor 57 and the pump 59 are supported on the support plate 77, and the partition plate 79 serves as a partition between a space in which the air compressor 57 is accommodated and a space in which the pump 59 is accommodated. Two positioning portions 77P for positioning the air compressor 57 are disposed on the support plate 77, at positions on the opposite sides of the air compressor 57. Two positioning portions 79P for positioning the pump 59 are disposed on the support plate 77, at positions on the opposite sides of the pump 59. The positioning portions 77P, 79P are in the form of a plate. However, the positioning portions 77P, 79P may have any shape, such as a pin shape. Further, the number of the positioning portions 77P, and the number of the positioning portions 79P are not limited to any particular number. The air compressor 57 and the pump 59 may be fixed onto the support plate 77 with bolts and nuts. Although no beams are disposed in front of the air compressor 57 and the pump 59 as illustrated in FIG. 2, beams may be disposed in front of the air compressor 57 and the pump 59.

As illustrated in FIG. 3, the drive shaft DS extends through a space defined by the support plates 77, 75 and the rear plate 791, and the side plate 78 has such dimensions that the side plate 78 is not in contact with the drive shaft DS.

As illustrated in FIG. 3, the side plate 76 has a plurality of through-holes 76H for weight reduction. Although not illustrated, the side plate 72, the partition plate 74, and the rear plate 791 also have such through-holes. The electronic devices may be electrically connected to one another with a cable or a connector through the through-holes 76H.

The outer faces of the casing of the motor assembly 30 are provided with, for example, bosses B1, B2, B6 used to fix the holding rack 70 to the motor assembly 30. Specifically, the holding rack 70 is not fixed to the suspension member 10, and is fixedly supported by the motor assembly 30. The holding rack 70 is supported on the side members 23, 24 via the mount insulators M73, M74 that are fixed to the side plates 72, 76, respectively.

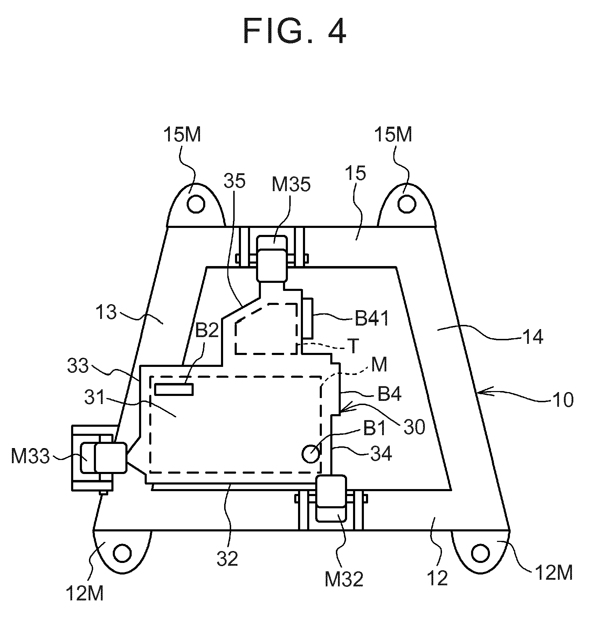

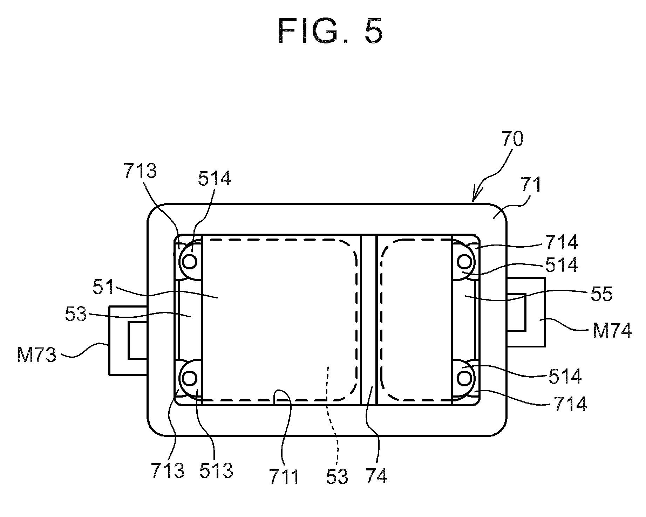

FIG. 4 is a top view of the suspension member 10 and the motor assembly 30 fixed to the suspension member 10, which have not been mounted in the vehicle body 2. FIG. 5 is a top view of the holding rack 70 that has not been fixed to the motor assembly 30. The suspension member 10 has the front cross member 12, the rear cross member 15, and a pair of side rails 13, 14 extending in the front-rear direction of the vehicle body 2. The front cross member 12 is longer than the rear cross member 15. The side rails 13, 14 obliquely extend such that the distance therebetween decreases in a direction from the front cross member 12 toward the rear cross member 15. As illustrated in FIG. 3, the center portion of each of the side rails 13, 14 is recessed downward (in each of the side rails 13, 14, the top surface of the center portion is recessed downward with respect to the top surface of the other portion, and the bottom surface of the center portion projects downward with respect to the bottom surface of the other portion).

The motor M and the transaxle T are respectively disposed in a front region and a rear region in the casing of the motor assembly 30. The drive shaft DS is assembled to the transaxle T of the motor assembly 30 after the suspension member 10 to which the motor assembly 30 is fixed is assembled to the vehicle body 2.

As illustrated in FIG. 3 and FIG. 4, the casing of the motor assembly 30 has a top portion 31, a front side portion 32, a left side portion 33, a right side portion 34, a right side portion 34, and a bottom portion 36. The motor assembly 30 is supported by the front cross member 12, the side rail 13 and the rear cross member 15 of the suspension member 10 via the mount insulator M32 located near the boundary between the front side portion 32 and the right side portion 34, the mount insulator M33 located on the left side portion 33 side, and the mount insulator M35 located behind the transaxle T.

To fix the holding rack 70 to the motor assembly 30, bosses B1, B2 are provided on the top portion 31, a boss B4 is provided on a front region of the right side portion 34, two bosses B41 are provided on a rear region of the right side portion 34, and a boss B6 is provided on a lower region of the right side portion 34. The number and positions of the bosses are not limited to those described above.

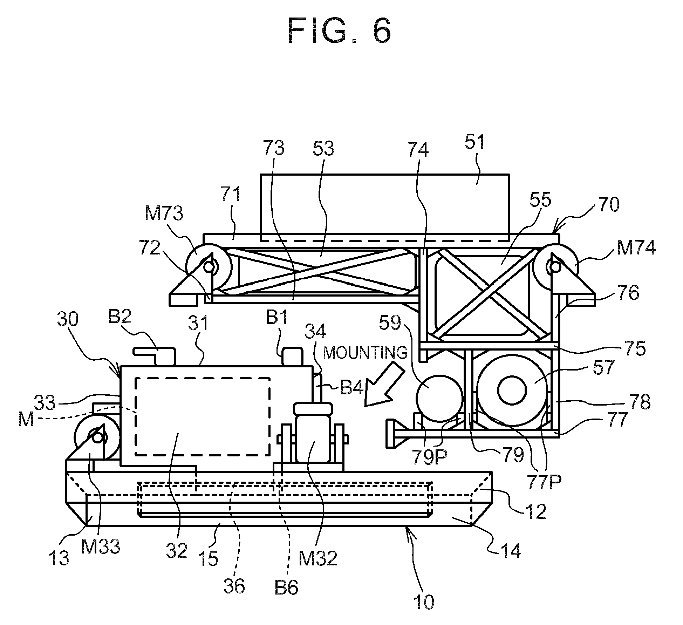

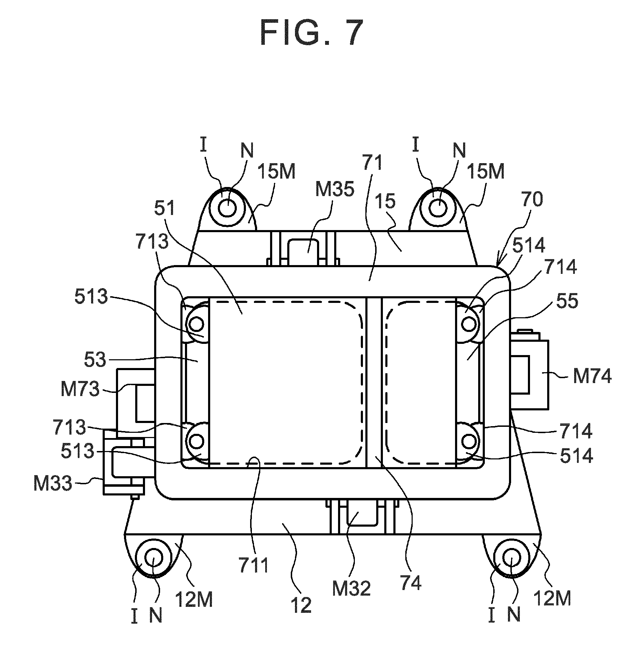

Next, a method of manufacturing the fuel cell vehicle 1 will be partially described. The motor assembly 30 is fixed to the suspension member 10. Subsequently, the fuel cell 51, the converter 53, the PCU 55, the air compressor 57, and the pump 59 are mounted in the holding rack 70, and these devices are electrically connected to each other. As illustrated in FIG. 6, the holding rack 70 is then fixed to the motor assembly 30 fixed to the suspension member 10. FIG. 6 illustrates a process of attaching the holding rack 70 to the motor assembly 30. As a result, the suspension member 10, the motor assembly 30, the holding rack 70, and the fuel cell 51 are assembled together in an integrated manner, as illustrated in FIG. 7. FIG. 7 illustrates a state where the holding rack 70 is fixed to the motor assembly 30 fixed to the suspension member 10.

Subsequently, the suspension member 10 provided with the motor assembly 30, the holding rack 70, and the fuel cell 51 is assembled to the vehicle body 2 from below. The mount insulators M73, M74 are fixed so as to be supported respectively by the side members 23, 24, and the fixing pieces 12M, 15M of the suspension member 10 are suspended from the side members 23, 24. After the motor assembly 30 is assembled to the vehicle body 2 as described above, the drive shaft DS is passed through the motor assembly 30. The holding rack 70 may be fixed to the motor assembly 30 before the motor assembly 30 is fixed to the suspension member 10, and then the motor assembly 30 fixedly provided with the holding rack 70 may be fixed to the suspension member 10. Alternatively, the components, such as the fuel cell 51, may be mounted in the holding rack 70 after the holding rack 70 is fixed to the motor assembly 30.

For example, when the suspension member 10 fixedly provided with the motor assembly 30 and the component, such as the fuel cell 51 or the PCU 55, are individually assembled to the vehicle body 2, the component, such as the fuel cell 51, needs to be suspended from above into the narrow motor compartment 3 and then attached to the vehicle body 2, and, in addition, the suspension member 10 needs to be assembled to the vehicle body 2 from below. Thus, the suspension member 10 and the component such as the fuel cell 51 need be individually assembled to the vehicle body 2, which makes the mounting work cumbersome and complicated. In contrast to this, in the present embodiment, the suspension member 10, the motor assembly 30, the holding rack 70, and the fuel cell 51 are assembled together in an integrated manner, and the assembly is assembled to the vehicle body 2, which simplifies the mounting work.

In the present embodiment, the components, such as the fuel cell 51 and the PCU 55, are attached to the holding rack 70 before being mounted in the narrow motor compartment 3 of the vehicle body 2. Thus, the fuel cell 51 and other electronic devices are electrically connected before being assembled to the vehicle body 2. That is, the electrical connection is performed in a wide space rather than in the narrow motor compartment 3, resulting in improved work efficiency.

As in the case of an engine vehicle, the holding rack 70 that holds the fuel cell 51 in place of an engine is fixed to the suspension member 10, and the suspension member 10 is assembled to the vehicle body 2. Thus, the fuel cell vehicle 1 is manufactured by a process similar to that for manufacturing an engine vehicle, that is, the fuel cell vehicle 1 is readily manufactured.

The fuel cell 51 is disposed adjacent to the converter 53 and the PCU 55, the converter 53 is disposed adjacent to the PCU 55, and the PCU 55 is disposed adjacent to the air compressor 57, the pump 59, and the motor assembly 30. Thus, these electronic devices, which are to be electrically connected, are collectively disposed in one place. This configuration maintains a short distance between these electronic devices, thereby preventing a reduction in electric power transmission efficiency, which may be caused by an increase in the distance between the electronic devices. The adjacent electronic devices may be connected to each other by a cable, or may be directly connected to each other by connectors provided on the electronic devices.

The positions where the converter 53 and the PCU 55 are disposed in the holding rack 70 are defined by the support plate 73 and the partition plate 74, for example. Thus, the converter 53 and the PCU 55 are readily disposed at prescribed positions. Disposing the electronic devices (e.g., the converter 53) at prescribed positions prevents poor electrical connection, which may be caused by misalignment of the electronic devices.

As illustrated in FIG. 1, the fuel cell 51 overlaps with the converter 53, the PCU 55, the air compressor 57, the pump 59, and the motor assembly 30 as viewed from above. Thus, the electronic devices (e.g., the PCU 55) are disposed in a narrow space, which contributes to effective use of the space in the motor compartment 3.

As illustrated in FIG. 3, the front side portion 32 of the motor assembly 30 is located forward of the fuel cell 51, the converter 53, the PCU 55, the air compressor 57, and the pump 59. In the event of, for example, a frontal collision of the fuel cell vehicle 1, an impact is first applied to the motor assembly 30, which has rigidity higher than that of the fuel cell 51 and the PCU 55, resulting in reduction of an impact to be applied to the components such as the fuel cell 51 and the PCU 55. Thus, it is possible to prevent damage to the fuel cell 51 and the electronic devices such as the PCU 55 driven at high voltage, thereby ensuring a higher level of safety.

The air compressor 57 and the pump 59 are disposed at such positions as to face the right side portion 34 of the motor assembly 30, and the PCU 55 is disposed at such a position as to partially face the right side portion 34. That is, the tops of the air compressor 57 and the pump 59 are located below the top portion 31 of the motor assembly 30. This configuration makes it possible to lower the position of the center of gravity of the entire holding rack 70, which is provided with the fuel cell 51, the converter 53, the PCU 55, the air compressor 57, and the pump 59, thereby improving the stability of the holding rack 70.

The holding rack 70 is fixed to the motor assembly 30, which is heavier and more rigid than any of the fuel cell 51, the converter 53, the PCU 55, the air compressor 57, and the pump 59. Thus, the holding rack 70 is stably supported by the motor assembly 30.

As illustrated in FIG. 1, the holding rack 70 is disposed such that the longitudinal direction of the holding rack 70 coincides with the axial direction of the drive shaft DS (i.e., the lateral direction of the vehicle). In general, an engine of a front-engine front-drive vehicle (FF vehicle) is disposed such that the longitudinal direction of the engine coincides with the axial direction of a drive shaft (i.e., the lateral direction of the vehicle). An engine compartment is also designed to achieve such disposition of the engine. Thus, a vehicle body for an existing front-engine front-drive vehicle can be applied to the fuel cell vehicle 1 such that the engine compartment is used as a motor compartment in which the holding rack 70 is disposed.

In a front-engine rear-drive vehicle (FR vehicle), the axial direction of a drive shaft coincides with the front-rear direction of a vehicle body, an engine is disposed such that the longitudinal direction of the engine coincides with the front-rear direction of the vehicle body. An engine compartment is also designed to achieve such disposition of the engine. Thus, a vehicle body for an FR vehicle can be applied to the fuel cell vehicle 1 according to the present embodiment by disposing the holding rack 70 such that the longitudinal direction of the holding rack 70 coincides with the axial direction of a drive shaft of the FR vehicle (i.e., the front-rear direction of the vehicle body).

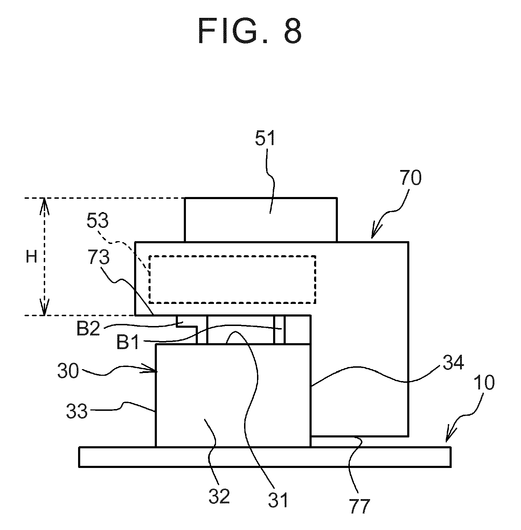

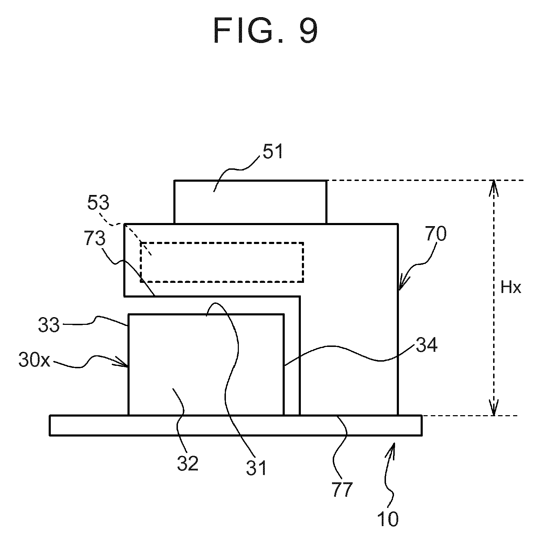

Next, a configuration for attenuating the vibrations of the holding rack 70 will be described. FIG. 8 schematically illustrates the configuration according to the present embodiment. FIG. 9 schematically illustrates the configuration in a comparative example. In the configuration according to the present embodiment, the support plate 73 of the holding rack 70 is fixed to the top portion 31 of the motor assembly 30 via the bosses B1, B2, and the support plate 73 is located above the support plate 77, which is located at the lowermost position within the holding rack 70. The support plate 73 is fixed to the top portion of the motor M. In the configuration in the comparative example, a support plate 77, which is located at the lowest position in a holding rack 70, is fixed to a suspension member 10, and the holding rack 70 is not fixed to a motor assembly 30x. In the configuration according to the present embodiment, the distance in the height direction between the support plate 73 fixed to the top portion 31 of the motor assembly 30 and the top of the fuel cell 51 is defined as a distance H. In the configuration in the comparative example, the distance in the height direction between the support plate 77 fixed to the suspension member 10 and the top of the fuel cell 51 is defined as a distance Hx.

In the comparative example, the holding rack 70 may vibrate strongly during the operation due to the long distance Hx. To reduce the vibrations of the holding rack 70, the holding rack 70 needs to be firmly fixed to the suspension member 10, which may result in an increase in weight or size of the fixing member. In contrast to this, in the present embodiment, the holding rack 70 is prevented from vibrating strongly because the distance H is shorter than the distance Hx. Thus, an increase in weight or size of the fixing member is prevented in the present embodiment.

The holding rack 70, which is fixed to the motor assembly 30, is preferably not fixed to the suspension member 10 because fixation of the holding rack 70 to both the motor assembly 30 and the suspension member 10 may cause transmission of the vibrations of the motor assembly 30 and the suspension member 10 to the holding rack 70, resulting in application of stress to the holding rack 70.

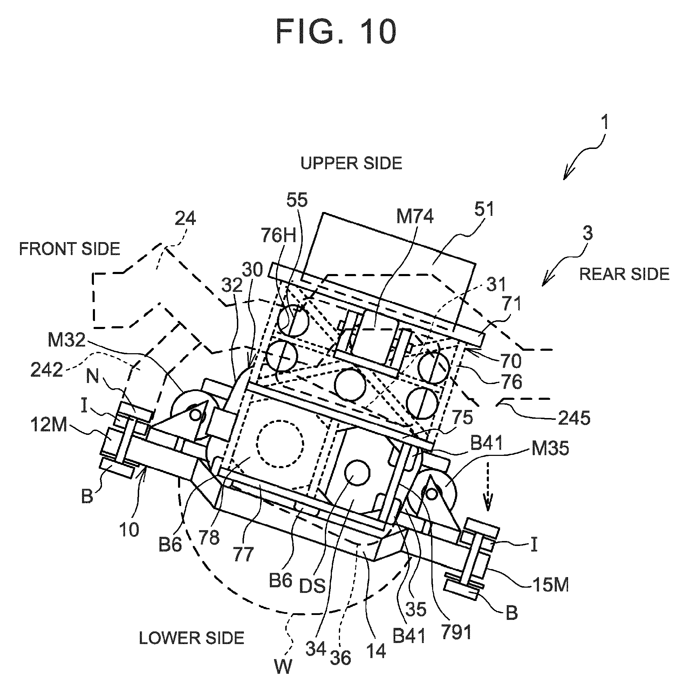

Next, detachment of the suspension member 10 in the event of a frontal collision of the vehicle will be described. FIG. 10 illustrates detachment of the suspension member 10 in the event of a frontal collision. In the event of a frontal collision, the side member 24 is deformed so as to be crushed, resulting in breakage of the support panel 245 fixed to the fixing piece 15M of the suspension member 10. The support panel 245, which is in the form of a plate, is located at the lower side of the side member 24 in the form of a rectangular tube, and the support panel 245 has a thickness smaller than that of any other portion of the side member 24. The fixing piece 15M of the suspension member 10 is suspended via the insulator I from the support panel 245 with a bolt B, a nut N. This configuration makes detachment of the fixing piece 15M from the support panel 245 easier than detachment of the fixing piece 12M from the column 242, in the event of a frontal collision. The same thing can be said for the side member 23. Thus, in the event of a frontal collision, the rear portion of the suspension member 10 is detached from the side members 23, 24, and the suspension member 10, the motor assembly 30, and the holding rack 70 are directed obliquely downward.

When the rear portion of the suspension member 10 is not detached from the side members 23, 24 in the event of a frontal collision, the fuel cell 51 and the holding rack 70 may enter the occupant compartment located behind the motor compartment 3 as the side members 23, 24 are crushed rearward. In the present embodiment, the rear portion of the suspension member 10 is actively detached from the side members 23, 24 before, for example, the fuel cell 51 enters the occupant compartment in response to deformation of the side members 23, 24. In this way, entry of the fuel cell 51 into the occupant compartment is prevented.

The foregoing embodiment should not be construed to limit the invention, and various modifications may be made without departing from the scope of the invention described in the claims.

The positional relationship among the fuel cell 51, the converter 53, the PCU 55, the air compressor 57, and the pump 59 should not be limited to the one in the foregoing embodiment. The converter 53 may be omitted.

The holding rack 70 may be fixed to both the motor assembly 30 and the suspension member 10. Alternatively, the holding rack 70 may be fixed to the motor assembly 30 but not to the suspension member 10, and may be partially supported by the suspension member 10.

Although the fuel cell vehicle has been described above in the embodiment, the invention is applicable to an electric vehicle other than a fuel cell vehicle or to a hybrid vehicle. When the invention is applied to an electric vehicle, a secondary battery is used in place of a fuel cell, and the secondary battery is electrically connected to an electronic device, such as a power control unit or an auxiliary device for air-cooling or water-cooling the secondary battery. The fuel cell and the secondary battery are also used for a power source.

An electric vehicle (1) includes a suspension member (10) attached to a vehicle body (2), a motor (30) fixed to the suspension member, a power source (51), an electronic device (53; 55; 57; 59) to which electric power is supplied from the battery, and a holding mechanism (70) including a holder and a fixing portion. The holder collectively holds the battery and the electronic device in an integrated manner. The fixing portion fixes the holder to the motor.

## Claims

1. An electric vehicle (1) **characterized by** comprising:
a suspension member (10) attached to a vehicle body (2);
a motor (30) fixed to the suspension member, the motor moving the electric vehicle;
a power source (51) used to drive the motor;
an electronic device (53; 55; 57; 59) to which electric power is supplied from the battery; and
a holding mechanism (70) including a holder and a fixing portion, the holder collectively holding the battery and the electronic device in an integrated manner, and the fixing portion fixing the holder to the motor.

2. The electric vehicle according to claim 1, **characterized in that** the fixing portion is fixed to a top portion of the motor, the fixing portion being located above a lowermost portion of the holding mechanism, the lowermost portion being located at a lowermost position within the holding mechanism.

3. The electric vehicle according to claim 1 or 2, **characterized in that** a front end portion of the motor is located forward of the battery and the electronic device in a front-rear direction of the vehicle body.

4. The electric vehicle according to any one of claims 1 to 3, **characterized in that** the electronic device includes:
an auxiliary device driven by electric power from the battery; and
a power control unit configured to convert a direct current from the battery into an alternating current and to supply the alternating current to the auxiliary device,
wherein the battery is disposed adjacent to the power control unit and electrically connected to the power control unit, and the power control unit is disposed adjacent to the auxiliary device and electrically connected to the auxiliary device.

5. The electric vehicle according to any one of claims 1 to 3, **characterized in that** the electronic device includes:
an auxiliary device; and
a power control unit,
wherein the battery overlaps with the motor, the power control unit, and the auxiliary device when viewed from above.

6. The electric vehicle according to any one of claims 1 to 5, **characterized in that** the holding mechanism is disposed such that a longitudinal direction of the holding mechanism coincides with an axial direction of a drive shaft connected to the motor.

7. The electric vehicle according to any one of claims 1 to 6, **characterized in that** the electronic device is opposed to a lateral side portion of the motor.

8. The electric vehicle according to claim 1 **characterized in that** the power source is a fuel cell or a secondary battery.

9. A holding mechanism **characterized by** comprising:
a holder that collectively holds, in an integrated manner, a battery and an electronic device to which electric power is supplied from the battery; and
a fixing portion fixed to a motor to be fixed to a suspension member to be attached to a vehicle body of an electric vehicle.

10. A method of manufacturing an electric vehicle, the method **characterized by** comprising:
fixing a motor to a suspension member; making a holder of a holding mechanism collectively hold, in an integrated manner, a battery and an electronic device to which electric power is supplied from the battery;
fixing a fixing portion of the holding mechanism to the motor; and
attaching the suspension member to a vehicle body of the electric vehicle, the motor having been fixed to the suspension member and the fixing portion of the holding mechanism having been fixed to the motor.
